# EUROPÄISCHE PATENTSCHRIFT

(11) **EP 0 662 858 B1**
(45) Veröffentlichungstag und Bekanntmachung des Hinweises auf die Patenterteilung: **29.12.1997**
(21) Anmeldenummer: 94921650.1
(22) Anmeldetag: 16.07.1994
(51) Int. Cl.: B01D 35/28, B07B 1/46, D21D 5/16

(54) **SIEB**
SIEVE
CRIBLE

(30) Priorität: 22.07.1993 DE 4324662
(43) Veröffentlichungstag der Anmeldung: 19.07.1995
(73) Patentinhaber: J.M. Voith GmbH, D-89522 Heidenheim (DE)
(72) Erfinder: BEUERMANN, Karl-Heinz, D-89522 Heidenheim (DE); RIENECKER, Reimund, D-89522 Heidenheim (DE)
(74) Vertreter: Weitzel, Wolfgang, Dr.-Ing.
(86) Internationale Anmeldenummer: EP9402340
(87) Internationale Veröffentlichungsnummer: WO9503111

(56) Entgegenhaltungen:
- EP-A- 0 042 742
- WO-A-82/02345
- CH-A- 680 708
- DE-A- 2 616 191
- FR-A- 2 539 644
- FR-A- 2 586 720

## Beschreibung

Die Erfindung betrifft ein Sieb, insbesondere einen Siebkorb entsprechend dem Oberbegriff des Patentanspruches 1.

Aus der amerikanischen Patentschrift 4717471 ist ein Sieb bekannt, bei welchem der Eintrittsbereich der Sieböffnung stark trichterförmig erweitert ist, wobei der Trichter einen sehr großen Öffnungswinkel von mehr als 120° aufweist und die Sieböffnungen runde Bohrungen oder Durchgangsöffnungen sind.

Andererseits gibt es Siebe, die durch parallel zueinander angeordnete Siebstäbe gebildet sind, die zwischen sich den Siebkanal bzw. die Sieböffnung bilden oder freilassen (DE-3327422).

Durch die US 41 93 503 ist ein ähnliches Sieb bekannt, bei welchem die ablaufende Kante konvex abgerundet ist. Dies ist aber nur im Zusammenhang mit einer praktisch geriffelten Sieboberfläche zu sehen, wobei sich die Riffelungen quer zur Hauptströmung entlang der Siebfläche erstrecken. Dadurch soll die zu sortierende Fasersuspension in eine ondulierende Bewegung gezwungen werden, um die Fasern und andere leichtere Stoffe - entsprechend der Nomenklatur dieser Schrift - in einer oberen Schicht, d.h. in einer größeren Entfernung von der Siebfläche zu konzentrieren, so daß also diese leichten Stoffe nicht durch die Sieböffnungen hindurch gelangen können. Dies ist natürlich der entgegengesetzte Effekt zu dem gemäß der Erfindung gewünschten Effekt, wo nämlich die Fasern, insbesondere Papier- oder Zellulosefasern durch die Sieböffnungen hindurch heraussortiert werden sollen, während Teile, die eine größere Abmessung haben als gerade die Fasern, nicht durch die Siebfläche hindurch gelangen sollen.

Bei der DE 33 27 422 ist es so, daß die Gefahr von Anspinnungen an den Siebkanten, die durch die verkantet angeordneten Siebstäbe gebildet werden, besteht. Bei solchen Sieben ist bekannt, daß der Durchsatz und die Sortiergüte mit der Schärfe des Profils ab- und die Empfindlichkeit für das Bilden von Verspinnungen, z.B. aus Zellstoff, zunehmen.

Aus der DE 26 16 191 ist ein Sieb bekannt geworden, das einen symmetrischen Aufbau besitzt und eine im Einströmbereich sich trichterförmig verengende und im Ausströmbereich eine sich trichterförmig erweiternde Sieböffnung aufweist. Nachteilig an einem derartigen Sieb ist, daß Fasern bzw. zu trennende Teilchen im schmalen Teil der Öffnung sich festsetzen und so das Sieb verstopfen.

Der Erfindung liegt deshalb die Aufgabe zugrunde, die oben geschilderten negativen Einflüsse bei Verwendung von Sieben wie sie aus dem Stand der Technik bekannt sind beim Sortiervorgang zu reduzieren.

Die erfindungsgemäße Lösung der Aufgabe ist durch die Merkmale des Anspruchs 1 charakterisiert. Vorteilhafte Ausführungsmöglichkeiten sind in den Unteransprüchen wiedergegeben.

Durch die konvexe Ausführung wenigstens eines Teilbereiches des Einströmbereiches der Siebdurchtrittsöffnung gemäß der Erfindung wird eine Querschnittsverengung in Durchtrittsrichtung erzielt, welche eine Geschwindigkeitszunahme des durch die Öffnung gelenkten Flüssigkeitsstrahles und damit eine verbesserte Abführung leichter Papier- oder Zellulosefasern durch die Siebdurchtrittsöffnungen hindurch erzielt. Die Abrundung im Einströmbereich bietet des weiteren den Vorteil, daß der Strömungswiderstand für die durch das Sieb gelenkte Faserstoffsuspension mit darin enthaltenen Papier- und Zellulosefasern sich verringert. Ein Abreißen der Faserstoffsuspensionsströmung beim Durchströmen durch die Sieböffnung kann dabei weitgehendst aufgrund der günstigen Querschnittsübergänge vermieden werden. Die erfindungsgemäße Ausführung der Sieböffnung ermöglicht es des weiteren, ein Festsetzen von Anspinnungen zu vermeiden. Dabei bleibt an sich die Sieboberfläche glatt und ist nicht ondulierend ausgebildet wie im Stand der Technik. Die Abrundung kann natürlich statt Radien auch angenäherte Formen, z.B. in Form von Teilen von Ellipsen aufweisen.

Unter Einströmbereich wird hierbei allgemein der Bereich verstanden der sich vom Siebeintritt in Durchtrittsrichtung erstreckt. Unter Ausströmbereich wird der Bereich verstanden der sich in Durchtrittsrichtung im Bereich des Ausstrittes befindet. Bezüglich der Relationen zwischen den Bereichen soll jedoch keine Festlegung getroffen werden.

Die konvexe Gestaltung von Teilbereichen des Einströmbereiches oder aber des gesamten Einströmbereiches wird durch wenigstens zwei Radien oder aber eine Vielzahl von aneinandergereihten unterschiedlichen Radien beschrieben. Die konvex gestalteten Bereiche können dabei im Querschnitt betrachtet Formen von Teilausschnitten eines Kreisumfanges, Teilbereichen von Ellipsen e.t.c. aufweisen.

Der gegenseitige Mittenabstand der Sieblöcher beträgt vorzugsweise mindestens das 3,5-fache des Lochdurchgangsquerschnitts an der engsten Stelle des Lochs, insbesondere in Richtung quer zur Erzeugenden der Siebkorbumfangsfläche (Einhüllende). Quer dazu kann der Abstand geringer sein, so daß sich z.B. die Abrundungsradien benachbarter Löcher fluchtend - tangential - berühren oder noch geringer. Die Abrundung kann auch in diesem Sinne so getroffen werden, daß der Querschnitt des Locheintrittsbereichs - quer zur Lochmittelachse (Längsachse) - eine Ellipse ist oder sich aus Kreisbögen zusammensetzt.

Im einzelnen gibt es für Siebdurchtrittsöffnungen mit der erfindungsgemäßen Gestaltung des Einströmbereiches mehrere Ausführungsmöglichkeiten. Dazu gehören:
1. eine Ausführung mit in Durchtrittsrichtung im Querschnitt sich trichterförmig verengender Siebdurchtrittsöffnung im Einströmbereich, wobei wenigstens ein Teil des Einströmbereiches konvex ausgeführt ist, und mit einer anschließenden diffusorartigen Erweiterung in Richtung des Siebaustrittes;
2. eine Ausführung mit in Durchtrittsrichtung im Einströmbereich sich trichterförmig verengendem Querschnitt, wobei wenigstens ein Teilbereich des Einströmbereiches konvex ausgeführt ist, mit einem sich an den Einströmbereich anschließenden Bereich mit konstantem Querschnitt und einem sich an diesen Bereich anschließenden Bereich mit diffusorartiger Erweiterung der Sieböffnung.

Dabei kann im Querschnitt betrachtet der Einströmbereich bzw. der konvex gekrümmt ausgeführte Teil des Einströmbereiches durch wenigstens einen Radius beschrieben werden, denkbar ist jedoch aber auch eine Beschreibung durch eine Vielzahl unterschiedlicher Radien.
An den Einströmbereich kann sich dann ein Bereich konstanten Querschnittes anschließen oder aber gleich der sich in Durchtrittsrichtung in Richtung des Austrittes erstreckende Ausströmbereich mit diffusorartig erweiternden Querschnitt. Für die einzelnen Teilbereiche bzw. deren Aneinanderreihung gibt es zwei Möglichkeiten. Entweder die Bereiche sind derart gestaltet und ausgeführt, daß sie derart miteinander verbunden werden können, daß keine Übergangskanten erzeugt werden. Dies ist im besonderen aufgrund der konvexen Gestaltung im Einströmbereich zwischen Einströmbereich und dem anschließenden Bereich mit konstanten Querschnitt oder aber zwischen Einströmbereich und dem Bereich des sich diffusorartig erweiternden Öffnungsquerschnittes möglich. Eine andere Möglichkeit besteht in einer Aneinanderreihung mit sprungartiger Querschnittsänderung und damit der Erzeugung von Übergangskanten, insbesondere im Bereich des Überganges zwischen dem Einströmbereich oder aber dem Bereich konstanten Querschnittes und dem Austrittsbereich. Eine besondere Ausführungsform ist dabei eine Aneinanderreihung von sich in Durchtrittsrichtung trichterförmiger Verengung des Einströmbereiches und sich trichterförmig erweiternder Austrittsöffnung. Dabei besteht die Möglichkeit, den Übergang zwischen konvex geformten bzw. ausgeführten Einströmbereich und sich diffusorartig erweiternden Ausströmbereich ebenfalls gekrümmt zu gestalten. Bei entsprechender Aneinanderreihung der einzelnen Abschnitte derart, daß der nachfolgende Bereich sich mit seinen Konturen tangential an den vorhergehenden Bereich anschließt, sind keine ungleichmäßigen Übergänge und damit auch keine Übergangskanten in der Durchtrittsöffnung möglich.

Die entsprechende Ausführung und der Einsatz liegen im Ermessen des Durchschnittsfachmannes.

Die erfindungsgemäße Lösung der Aufgabe wird nachfolgend anhand von Figuren in der Zeichnung erläutert. Darin ist im übrigen folgendes dargestellt:
- Figur 1: eine Ausführungsform eines Ausschnittes einer Siebfläche, mit konvex gestaltetem Einströmbereich;
- Figur 2: eine Ausführung eines erfindungsgemäß konvex gestalteten Einströmbereiches, wobei sich die Krümmung der Kontur des Einströmbereiches durch unterschiedliche Radien beschreiben läßt;
- Figur 3: eine Ausführung mit konvex gestalteten Einströmbereich und sich anschließenden Bereich konstanten Querschnittes;
- Figur 4: zeigt eine Ausführung, wobei der Übergang zwischen Einströmbereich und Austrittsbereich ebenfalls konvex gestaltet ist.

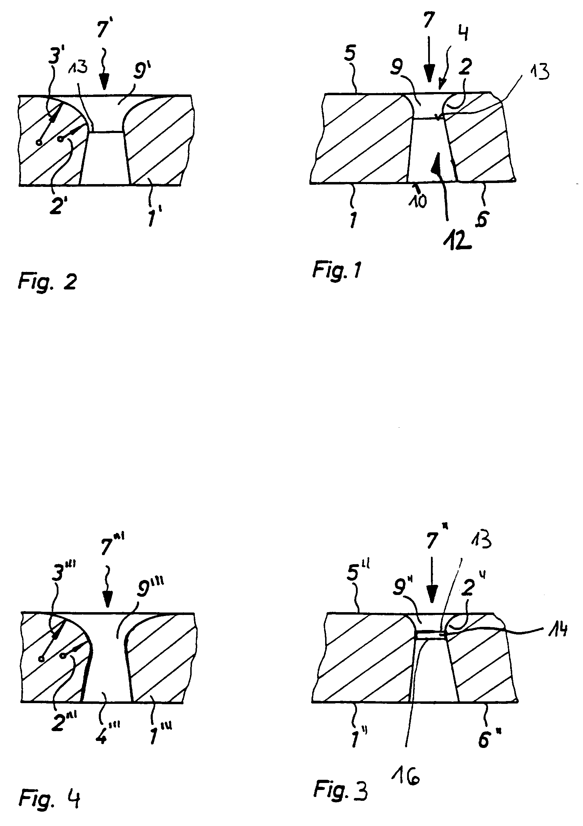

In Fig. 1 ist eine einzige Siebdurchtrittsöffnung in Form eines Siebloches 4 dargestellt, dessen Eintrittsströmbereich mit 9 bezeichnet ist, und das in dem Siebblech 1 - das die Siebfläche darstellt - eingearbeitet ist. Die gesamte Siebdurchtrittsöffnung 7 weist eintrittsseitig eine Erweiterung auf, die durch die Abrundung 2 des Einströmbereiches 9 des Siebloches 4 gebildet ist. Dabei ist die Eintrittsseite der Siebfläche bzw. des Siebblechs 1 mit 5 und die Austrittsseite mit 6 gekennzeichnet. Die Durchströmung des von der Siebdurchtrittsöffnung beschriebenen Kanales erfolgt also entsprechend dem zur Bezugsziffer 7 gehörenden Pfeil. Der Abrundungsradius 2 beträgt zwischen 0,5 und 3 mm, vorzugsweise zwischen 0,5 und 2,5 mm.

Im Anschluß an den Einströmbereich 9 ist die Sieböffnung 4 in Richtung des Austrittes 10 diffusorartig erweitert. Diese Erweiterung bildet im Bereich des Ausstrittes 10 den sogenannten Ausströmbereich 12.

Der Übergang zwischen dem Einströmbereich 9 und der anschließenden diffusorartigen Erweiterung kann gleichmäßig erfolgen, d.h. die diffusorartige Erweiterung schließt sich dann tangential an die Abrundung 2 an, oder aber der Übergang erfolgt durch Bilden einer Übergangskante 13.

In der Figur 2 haben ähnliche Teile gleiche Bezugszeichen, jedoch mit einem Beistrich versehen. Hierbei sind für den Einströmbereich der Siebdurchtrittsöffnung, beispielsweise ebenfalls in Form eines Siebloches 4', zwei Abrundungsradien 2' und 3' vorgesehen, wobei der kleinere Radius sich näher zum Übergang, insbesondere zur Übergangskante 13' an die diffusorartige Erweiterung befindet. Die angegebenen Größen der Radien beziehen sich vorzugsweise auf den der Übergangskante 13' näheren Radius 2'. Dabei ist diese Übergangskante im allgemeinen der engste Querschnitt des Siebloches, weil sich danach der Durchgangsquerschnitt wieder vergrößert, eine Maßnahme die getroffen wird, um ein Festklemmen von Partikeln im Siebloch zu verhindern.

Die angegebenen Radien können auch bei sehr dünnen Blechen noch weiter unterschritten werden und z.B. nur 0,2 mm betragen. Die angegebenen Radien beziehen sich nicht nur auf Sieblöcher sondern auch auf Siebschlitze. Die Fig. 1 und 2 könnten ja ebensogut auch Querschnitte durch Siebschlitze sein, wobei der Querschnitt quer zur Längsrichtung der Siebschlitze betrachtet wird.

Die erfindungsgemäßen Siebe sind vorzugsweise zur Sortierung von Fasersuspensionen vorgesehen, wobei die Fasern (Zellulose oder Papier) durch die Sieböffnungen hindurch auf die Gutstoffseite gelangen sollen.

Eine andere, hier in Figur 3 dargestellte Möglichkeit, besteht darin, an den sich in Durchtrittsrichtung trichterförmig verengenden Einströmbereich einen Bereich konstanten Querschnittes 14 vorzusehen. Dabei können die Übergänge zwischen dem Einströmbereich 9'', dem Bereich konstanten Querschnittes 14 und/oder dem Bereich konstanten Querschnittes 14 und der diffusorartigen Erweitetung derart ausgeführt sein, daß diese sich nicht tangential aneinander anfügen sondern Übergangskanten 13 ''oder 16 bilden.

In der Figur 4 ist eine Ausführung einer Sieböffnung dargestellt, welcher in der Praxis eine weniger große Bedeutung zukommen könnte, da an diese fertigungstechnisch sehr hohe Ansprüche zu stellen sind. Die Siebdurchtrittsöffnung 4''' weist in Durchtrittsrichtung einen sich trichterförmig verengenden Bereich auf, an den sich der sich in Richtung des Austritts 10''' erweiterende Bereich anschließt. Dabei erfolgt der Anschluß der diffusorartigen Erweiterung ähnlich einer Venturidüse derart, daß ein gleichmäßiger Übergang zwischen dem zum Teil konvex gestalteten Einströmbereich und sich in der Regel diffusorartig erweiternden Ausströmbereich erreicht wird. Dies wird dadurch realisiert, daß sich die diffusorartige Erweiterung und damit der Ausströmbereich 12''' tangential an den Einströmbereich anschließt, so daß keinerlei Querschnittssprünge entstehen.

Die hier dargestellten Siebdurchtrittsöffnungen weisen neben einem erweiterten Eintritt eine in Richtung des Austrittes diffusorartige Erweiterung auf. Dies ist eine bevorzugte Ausführung. Ausführungen mit gleichbleibenden Querschnitt bis zum Austritt im Anschluß an den Einströmbereich sind ebenfalls denkbar.

## Patentansprüche

1. Sieb, insbesondere Siebblech, zur Sortierung von Faserstoffsuspensionen
1.1 mit einer Vielzahl von lochähnlich gestalteten Siebdurchtrittsöffnungen (7) mit einem Ein- (9, 9', 9'', 9''') und einem Ausströmbereich (10, 10''');
1.2 die Siebdurchtrittsöffnungen (7) sind im Einströmbereich (9, 9', 9'', 9''') in Durchtrittsrichtung trichterförmig verengend ausgeführt;
1.3 wenigstens ein Teilbereich des Einströmbereiches (9, 9', 9'', 9''') ist konvex abgerundet ausgeführt.
dadurch gekennzeichnet, daß
1.4 wenigstens ein Teilbereich des Einströmbereiches eine konvexe Krümmung aufweist, die aus wenigstens zwei Abschnitten mit unterschiedlichen Krümmungsradien zusammengesetzt ist, wobei die Durchtrittsöffnung an ihrem Beginn den größeren Krümmungsradius aufweist.

2. Sieb nach Anspruch 1, dadurch gekennzeichnet, daß der gesamte Einströmbereich (9, 9', 9'', 9''') der Sieböffnung (7) konvex abgerundet ist.

3. Sieb nach einem der Ansprüche 1 bis 2, dadurch gekennzeichnet, daß die Siebdurchtrittsöffnungen (7) in Durchtrittsrichtung im Austrittsbereich (10, 10''') diffusorartig erweiternd ausgeführt sind.

4. Sieb nach Anspruch 3, dadurch gekennzeichnet, daß zwischen Eintrittsbereich (9, 9', 9'', 9''') und Austrittsbereich (10, 10''') ein Bereich mit in Durchtrittsrichtung betrachtet gleichbleibenden Querschnitt (14) vorgesehen ist.

5. Sieb nach einem der Ansprüche 1 bis 4, dadurch gekennzeichnet, daß die Übergänge zwischen Ein- (9, 9', 9'', 9''') und Ausströmbereich (10, 10'') oder Einströmbereich (9, 9', 9'', 9'''), Bereich konstanten Querschnittes (14) und/oder Bereich konstanten Querschnittes (14) und Ausströmbereich (10, 10''') derart ausgeführt sind, daß diese eine Übergangskante (13, 16) bilden.

6. Sieb nach einem der Ansprüche 1 bis 3, dadurch gekennzeichnet, daß der Übergang zwischen Einströmbereich (9, 9', 9'', 9''') und Ausströmbereich (10, 10''') konvex abgerundet ausgeführt ist.

## Claims

1. Sieve, in particular sieve plate, for the sorting of fibre suspensions
1.1 with a plurality of sieve apertures (7) designed in the manner of holes with an inlet region (9, 9', 9'', 9''') and an outlet region (10, 10''');
1.2 the sieve apertures (7) are designed so as to taper in the form of a funnel in the passage direction in the inlet region (9, 9', 9'', 9''');
1.3 at least a part of the inlet region (9, 9', 9'', 9''') is convexly rounded in design;
characterised in that
1.4 at least a part of the inlet region has convex curvature composed of at least two portions with different radii of curvature, the aperture having the greater radius of curvature at its beginning.

2. Sieve according to claim 1, characterised in that the entire inlet region (9, 9', 9'', 9''') of the sieve aperture (7) is convexly rounded.

3. Sieve according to one of claims 1 to 2, characterised in that the sieve apertures (7) are designed to widen in the manner of a diffusor in the passage direction in the outlet region (10, 10''').

4. Sieve according to claim 3, characterised in that a region with a cross section (14) which is uniform when observed in the passage direction is provided between inlet region (9, 9', 9'', 9''') and outlet region (10, 10''').

5. Sieve according to one of claims 1 to 4, characterised in that the transitions between inlet region (9, 9', 9'', 9''') and outlet region (10, 10'') or inlet region (9, 9', 9'', 9'''), region of constant cross section (14) and/or region of constant cross section (14) and outlet region (10, 10''') are designed so as to form a transition edge (13, 16).

6. Sieve according to one of claims 1 to 3, characterised in that the transition between inlet region (9, 9', 9'', 9''') and outlet region (10, 10''') is convexly rounded in design.

## Revendications

1. Crible, en particulier tôle de criblage, pour classer des suspensions de fibres, dans lequel
1.1 un grand nombre d'orifices de passage (7) ont la forme de trous et présentent chacun une zone d'entrée (9, 9', 9'', 9''') et une zone de sortie (10, 10''')
1.2 les orifices de passage (7) ont, dans leur zone d'entrée (9, 9', 9'', 9''') la forme d'un entonnoir se resserrant dans la direction d'écoulement
1.3 au moins une partie de la zone d'entrée (9, 9', 9'', 9''') a une forme arrondie convexe
caractérisé en ce qu'
1.4 au moins une partie de la zone d'entrée présente une courbure convexe et est constituée de l'assemblage d'au moins deux sections ayant des rayons de courbure différents dont le plus grand correspond à la section située au début de l'orifice de passage.

2. Crible selon la revendication 1,
caractérisé en ce que
l'ensemble de la zone d'entrée (9, 9', 9'', 9''') de l'orifice de passage (7) a une forme arrondie convexe.

3. Crible selon une des revendications 1 et 2,
caractérisé en ce que
les orifices de passage (7), dans leur zone de sortie dans le sens de passage, vont en s'élargissant à la manière d'un diffuseur.

4. Crible selon la revendication 3,
caractérisé en ce qu'
entre la zone d'entrée (9, 9', 9'', 9''') et la zone de sortie (10, 10''') se trouve une zone de section constante (14) par rapport à la direction de passage.

5. Crible selon une des revendications 1 à 4,
caractérisé en ce que
les transitions entre la zone d'entrée (9, 9', 9'', 9''') et la zone de sortie (10, 10'') ou entre la zone d'entrée (9, 9', 9'', 9''') et la zone à section constante (14) et/ou entre la zone à section constante (14) et la zone de sortie (10, 10''') sont réalisées de manière à former un bord de transition (13, 16).

6. Crible selon une des revendications 1 à 3,
caractérisé en ce que
la transition entre la zone d'entrée (9, 9', 9'', 9''') et la zone de sortie (10', 10''') a une forme arrondie convexe.
